# EUROPEAN PATENT APPLICATION

(11) **EP 4 825 627 A1**
(43) Date of publication of application: **21.10.2026**
(21) Application number: 26172443.9
(22) Date of filing: 15.04.2026
(51) Int. Cl.: B60K 11/08, B62D 35/00

(54) **IMPROVED FRONT PORTION OF A HEAVY VEHICLE**

(30) Priority: 16.04.2025 IT 202500008571
(71) Applicant: Iveco S.p.A., 10156 Torino (IT)
(72) Inventor: MORANO, Ivan Vito Antonio, 10156 Torino (IT); ESPOSITO, Carmine Andrea, 10156 Torino (IT)
(74) Representative: Studio Torta S.p.A.

(57) **Abstract**

Air guiding element (81) for a cab (3) of a commercial vehicle (1), the air guiding element (81) being a grille support comprising a main portion (82) configured, in use, to be placed rear to a grille (71) of the vehicle (1), the main portion (82) defining at least one sector (84, 85, 86) and at least one ridge (87) separating the at least one sector (84, 85, 86) in a plurality of areas (88, 89), wherein at least one area (89) among the plurality of areas (88, 89) is empty, therefore allowing air passage and wherein at least another area (88) among the plurality of areas (88, 89) is full, thereby denying air passage.

## Description

### CROSS-REFERENCE TO RELATED APPLICATIONS

This patent application claims priority from Italian patent application no. 102025000008571 filed on April 16, 2025, the entire disclosure of which is incorporated herein by reference.

### TECHNICAL FIELD

The present invention concerns a front portion of a heavy vehicle.

The present invention finds its preferred, although not exclusive, application in commercial vehicles such as trucks. Reference will be made to this application by way of example below.

### BACKGROUND OF THE INVENTION

Commercial vehicles such as trucks comprises a cab configured to house both operative systems of the vehicle and driver's seat arrangement.

Driver's seat arrangement is placed, in the most common configuration also known as "cab over", above the operative systems also for sake of providing a great view field over the road.

Accordingly, cabs of commercial vehicles have a vertical extension greater with respect to passenger vehicles thereby having increased problems linked to aerodynamic drag.

Indeed, aerodynamic drag increases squarely with respect to the speed of the vehicle. Accordingly, the problem is particularly felt in commercial vehicles that are further at high speed on highways for long distances.

It is therefore clear that reducing vehicle drag would inevitably reduce fuel consumption and therefore increase the efficiency of the vehicle. Such aim is valid both for traditional internal combustion engines and for electric-traction vehicles or hydrogen-based traction vehicles.

Therefore, the need is felt to reduce aerodynamic drag of commercial vehicle thereby increasing the efficiency of the vehicle.

An aim of the present invention is to satisfy the above mentioned needs in a cost-effective and optimized manner.

### SUMMARY OF THE INVENTION

The aforementioned aim is reached by an air guiding element, a cab and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a cab of a commercial vehicle in an opened configuration and provided with the air guiding element according to the invention; and
- Figure 2 is a front view of the air guiding element according to the invention.

### DETAILED DESCRIPTION OF THE INVENTION

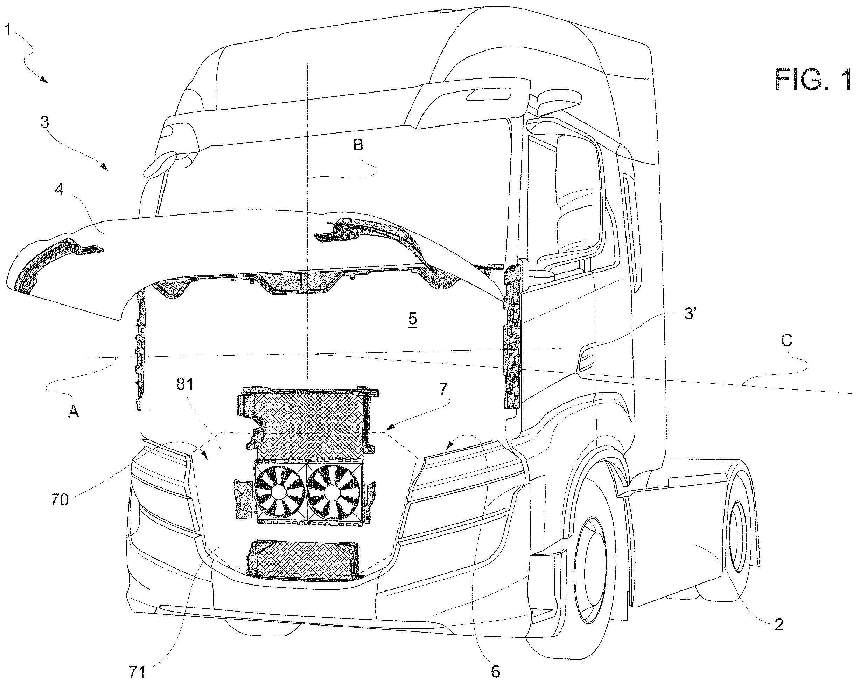

Figure 1 discloses a portion of a vehicle 1 such as a commercial vehicle, e.g. a truck, extending along a longitudinal axis A that coincides, in normal use, with driving direction of the vehicle 1, a transversal axis C and a vertical axis B.

In detail, vehicle 1 comprises a frame 2 and a cab 3 extending over the frame 2 along vertical axis B.

In particular, cab 3 comprises a hood 4 that is carried in a movable manner with respect to the body 3' of the cab 3 to assume a first configuration in which isolates a space 5 of cab 3 with respect to environment and a second configuration in which allows access to space 5 from the environment.

In detail, such hood 4 is linked to the body 3' of cab 3 by a movable connection (not shown) such as a hinge connection, configured to allow rotation of an upper portion of the hood 4 with respect to an axis parallel to transversal axis C.

The space 5 is therefore delimited by a perimeter 6 that matches with the shape defined by hood 4 in the first above mentioned configuration.

Space 5 may house different operative elements of the vehicle 1, in particular a portion of a traction system thereof, and in detail a heat management portion 7 comprising heat exchangers/ventilation means configured to cool down an operative fluid of the vehicle.

In particular, heat management portion 7 is placed in a central portion of the space 5 along transversal axis C and in particular extends along vertical axis B, starting from a lower edge of perimeter 6 and - in the disclosed embodiment - does not reach the upper edge thereof.

Advantageously, the cab 3 comprise a plurality of elements configured to direction the airflow impacting, during driving, on the hood 4 in order to reduce aerodynamic drag.

In detail, the elements can be carried by the hood 4 or by the body 3' of cab 3 along perimeter 6 of the space 5 or housed within space 5. In case such elements are carried body 3' or within space 5, they are preferably, in use, in contact with the hood 4.

In particular, the elements comprise:
- Sealing elements configured to avoid air passage through the hood 4 or between the hood 4 and the body 3 via space 5; and/or
- Guiding elements configured to channel and direction air passage through the hood 4 within space 5.

In the present embodiment, cab 3 comprise a grille assembly 70 provided with a grille 71 and a grille cover 81.

In particular, the air guiding element is defined by the grille cover 81 itself.

Indeed, the grille cover 81 is placed rear the grille 71 along longitudinal axis A thereby directing airflow passing through grille 71 toward a specific position within space 5. In detail, it is configured to channel air towards the heat management portion 7 housed.

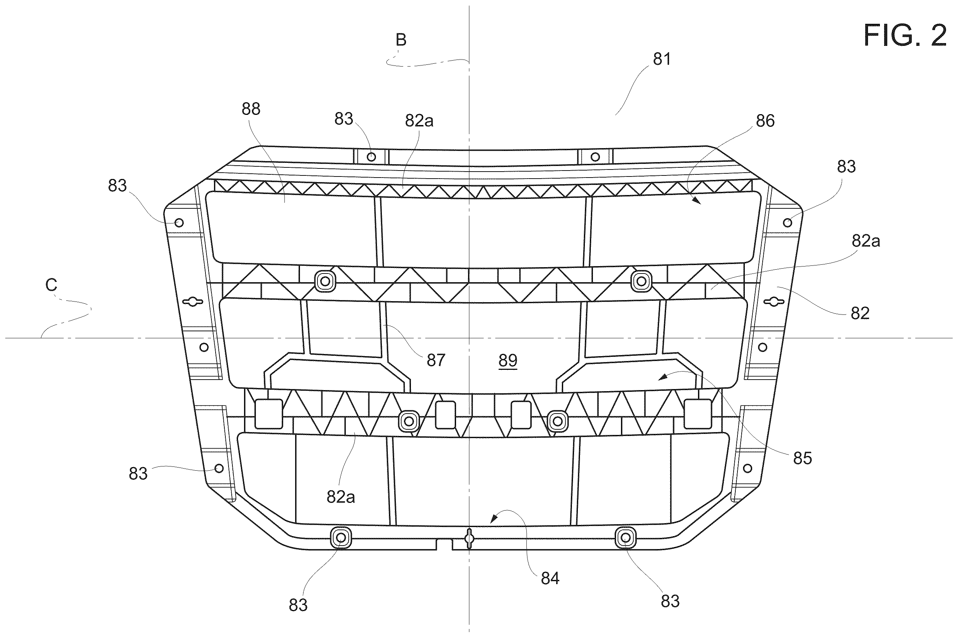

As best shown in figure 2, the grille cover 81 comprises a main portion 82 that is shaped as a closed shape element contoured according to the specific shape of the grille 71 and is substantially flat.

The main portion 82 defines a plurality of openings 83 preferably realized along the perimeter of the main portion 82 and configured to allow fixation of the main portion 82 to the grille 71 and/or hood 4 e.g. via threaded elements such as screws.

The main portion 82 may further comprise an outer side that is substantially smooth and an inner side that is provided with a reinforced portion 82a comprising a pattern of ridges configured to increase mechanical resistance of the main portion 82.

Preferably, main portion 82 is realized as one piece. Furthermore, main portion 82 is realized in polymeric material, such as plastic.

Preferably the main portion 82 defines a plurality of sectors 84, 85, 86 realized in the main portions 82 and configured to correspond to different portions in the space 5 to direct air.

Sectors 84, 85, 86 are furthermore divided by ridges 87 extending therebetween. Such ridges 87 have principally a structural function of providing robustness to the main portion 82.

Ridges 87 within sectors 84, 85, 86 define areas 88, 89 having different shapes according to the shape of ridges 87 and sectors 84, 85, 86.

Some of the areas 89 are empty, i.e. are openings that allow air passage through main portion 82 while others areas 88 are full i.e. are walls that direct the air towards the empty areas 89.

In the disclosed embodiment, sectors 84, 85, 86 are placed in row, in particular they are adjacent along vertical axis B and extends along transversal axis C.

Ridges therefore defines areas 88, 89 adjacent along the transversal axis C, some are at the same quota along vertical axis B, other are one above the adjacent ones.

In particular, the empty areas 89 are placed in a substantially central and lower portion of main portion 82, while the full areas 88 are placed about the empty areas 89 along lateral and upper edge of the empty areas 89.

In detail, empty areas 89 are grouped together defining an overall main passage for air that result blocked with respect to the perimeter of such overall main passage.

In particular, empty areas 89 and full area 88 are placed in function of the shape of the heat management portion 7.

The operation of the embodiment of the invention as described above is the following.

The guiding element 81 channels air towards the heat management portion 7, thereby at the same time increasing the air passing through this latter and therefore cooling down the operative fluid and reducing air drag due to passage of air through remaining portions of space 5.

In view of the foregoing, the advantages of the air guiding element, cab and vehicle according to the invention are apparent.

Thanks to the claimed guiding element, the air passage is channeled towards the required portion of space 5 thereby allowing at the same time maximizing air passage towards heat management portion 7 and avoiding the passage of air towards the perimeter of space 5.

In this way, drag is reduced and, moreover, efficiency of the heat management portion 7 increased. The two effects synergically acts to improve efficiency of the vehicle 1

In particular, the proposed shape is voted to allow housing of required operative systems while channeling air passage.

Furthermore, the realization in plastic material and in low pieces, e.g. by molding, allows cost-effective production of the guiding element.

In addition, the peculiar ridge structure allows to provide a robust structure that resists to the mechanical stresses, such as temperature and vibrations, occurring in such zone of space 5.

It is clear that modifications can be made to the described air guiding element, cab and vehicle which do not extend beyond the scope of protection defined by the claims.

For example, the cab of the vehicle may be different and similarly hood. Accordingly, the shape and opening/s of the portions of the vehicular element claimed may be different.

## Claims

1. Air guiding element (81) for a cab (3) of a commercial vehicle (1), said air guiding element (81) being a grille support comprising a main portion (82) configured, in use, to be placed rear to a grille (71) of said vehicle (1), said main portion (82) defining at least one sector (84, 85, 86) and at least one ridge (87) separating said at least one sector (84, 85, 86) in a plurality of areas (88, 89), wherein at least one area (89) among said plurality of areas (88, 89) is empty, therefore allowing air passage and wherein at least another area (88) among said plurality of areas (88, 89) is full, thereby denying air passage.

2. Air guiding element according to claim 1, comprising a plurality of sectors (84, 85, 86) in row adjacent one to the other.

3. Air guiding element according to claim 2, wherein said row are adjacent along vertical axis (B) and extends along transversal axis (C).

4. Air guiding element according to any of the preceding claims, wherein said main portion (82) is realized as one piece.

5. Air guiding element according to any of the preceding claims, wherein said main portion (82) is realized in plastic material.

6. Air guiding element according to any of the preceding claims, wherein said main portion comprise an inner portion comprising at least one reinforced portion (82a).

7. Air guiding element according to claim 6, wherein said reinforced portion (82a) comprises a pattern of ridges.

8. Air guiding element according to any of the preceding claims, comprising fixation points (83) configured to fix said air guiding element (21) to said hood (4).

9. Air guiding element according to claim 8, wherein said fixation points (83) are realized in a perimeter of said main portion (82).

10. Air guiding element according to any of the preceding claims, comprising a plurality of empty areas (88) grouped together in a center-lower portion of said main portion (82).

11. Cab (3) of a commercial vehicle (1) comprising a body (3') and a hood (4) connected to the body (3') by a movable connection to selectively allow or deny access to a space (5) realized in said body (3'), said cab (3) being provided with an air guiding element (81) according to any of the preceding claims, said air guiding element (81) being configured to channel air coming through said hood (4) within a portion of space (S).

12. Vehicle (1) comprising a cab according to claim 11.
